# FASCICULE DE BREVET EUROPEEN

(11) **EP 2 076 768 B1**
(45) Date de publication et mention de la délivrance du brevet: **28.01.2015**
(21) Numéro de dépôt: 07848284.1
(22) Date de dépôt: 25.09.2007
(51) Int. Cl.: G01N 33/38, C04B 14/06, G01N 31/22

(54) **PROCEDE EN LIGNE DE PRODUCTION DE SABLE PRESENTANT UNE VALEUR DE BLEU DE METHYLENE CONTROLEE**
ONLINE-VERFAHREN ZUR HERSTELLUNG VON SAND MIT GESTEUERTEM METHYLENBLAU-WERT
ON-LINE PROCESS FOR THE PRODUCTION OF SAND HAVING A CONTROLLED METHYLENE BLUE VALUE

(30) Priorité: 26.09.2006 FR 0608419
(43) Date de publication de la demande: 08.07.2009
(73) Titulaire: Lafarge, 75116 Paris (FR)
(72) Inventeur: JACQUET, Alain, 01600 Saint Didier de Formans (FR); MARTIN, Laurence, 38080 L'Isle D'Abeau (FR); BROCAS, Stéphane, 34000 Montpellier (FR); YAHIAOUI, Hakimi, 69800 Saint Priest (FR)
(74) Mandataire: Décourtye, David Olivier
(86) Numéro de dépôt international: PCT/FR2007/001561
(87) Numéro de publication internationale: WO 2008/037891

(56) Documents cités:
- WO-A-01/53607
- METSO MINERALS: "Ein neues Konzept zur Brechsand-Erzeugung" METSO MINERALS KUNDENINFORMATIONEN: AGGREGATES NEWS, no. 5, 2003, XP002444610
- CEN: "EN 933-9: Prüfverfahren für geometrische Eigenschaften von Gesteinskörnungen, Teil 9: Beurteilung von Feinanteilen - Methylenblau-Verfahren" NORMES, 1998, XP008081756 cité dans la demande
- TRAN NGOC LAN, MILLON-DEVIGNE P.: "L'essai au bleu de méthylène turbidimétrique" BULLETIN DE L'ASSOCIATION INTERNATIONALE DE GÉOLOGIE DE L'INGÉNIEUR, no. 29, 1984, pages 453-456, XP002444609 Paris
- CEN: "EN 12620: Gesteinskörnungen für Beton" NORMES, 2002, XP008081634

## Description

### DOMAINE DE L'INVENTION

La présente invention concerne un procédé en ligne de production de sable présentant une valeur de bleu de méthylène contrôlée, ainsi qu'une ligne de production associée et qu'un procédé de mesure de la valeur de bleu de méthylène spécialement adapté audit procédé de production de sable.

### ARRIERE-PLAN TECHNIQUE

Les bétons prêts à l'emploi répondent à des critères précis de formulation qui nécessitent l'utilisation de sables présentant un certain nombre de caractéristiques afin de pouvoir être utilisés dans cette application. Parmi ces caractéristiques, il en est une qui est essentielle, il s'agit de la propreté des sables. La propreté est relative à la quantité d'impuretés nocives, vis-à-vis d'une application donnée. Ces dernières peuvent être de divers types mais les impuretés les plus néfastes sont les argiles.

En effet, la nature et la teneur des argiles dans les sables influencent les caractéristiques d'ouvrabilité des bétons. Or, en chantier, les ouvriers travaillent généralement à ouvrabilité constante. Par conséquent, la présence d'argiles dans les sables nécessite des modifications de formulation. La correction est possible en ajoutant des adjuvants ou de l'eau. Toutefois l'ajout d'adjuvants présente un coût important. Par ailleurs, si l'adjuvant est un retardateur, la correction en adjuvant n'est réalisable que dans une certaine mesure. Quant à l'ajout d'eau, il est problématique car il engendre une chute des résistances mécaniques du béton durci, un problème de fissuration et entraîne des effets secondaires dans les bétons fluides tels que le ressuage ou la ségrégation des gravillons.

Il existe donc des normes relatives à la propreté des granulats pour l'application béton. La première norme est un test appelé « Equivalent de Sable : SE » (norme NF EN 933-8). Il s'agit selon cette norme de faire un essai consistant à faire floculer, dans une éprouvette, les fines du sable testé et à comparer le volume du floculat au volume total des sédiments. Plus il y a de fines floculées, plus l'équivalent de sable diminue et plus le sable est considéré comme sale. Cet essai n'est toutefois pas suffisamment sensible pour permettre de prédire de futurs problèmes dans un béton.

Le second test est appelé « Valeur au Bleu de Méthylène : MBV » (nonne NF EN 933-9). Il s'agit de rechercher la quantité maximale de bleu de méthylène susceptible de s'adsorber sur les impuretés du sable. En effet ce colorant présente une affinité très forte pour les argiles, cette affinité dépendant directement de la teneur en argiles dans le sable et de la nature des argiles considérées. Ce test peut être effectué simplement en ajoutant « goutte à goutte » (ajout progressif de volumes donnés de solution de bleu) le bleu de méthylène dans une solution contenant du sable et en réalisant des taches avec cette solution à différentes échéances sur un papier filtre. La mesure est effectuée sur la fraction 0-2 mm du sable, et la norme actuelle impose une mesure par semaine en carrière sur le sable destiné à l'application béton.

On connaît également un appareillage appelé « valise de Bleu » qui permet de mesurer la nocivité des fines de sable (voir la norme NF 18-595). Ce matériel compact comprend un bécher avec agitateur, une pompe péristaltique et un système de mesure spectrophotométrique comprenant une cellule de mesure. La mesure (dite turbidimétrique) est réalisée sur une suspension de fines de sable, c'est-à-dire de particules de taille inférieure à 80 µm. Le principe consiste à ajouter progressivement, dans le bécher contenant cette suspension, une solution de bleu de méthylène puis à l'envoyer dans une cellule (via la pompe) afin de mesurer l'absorption, à la longueur d'onde de 660 nm (correspondant à l'absorption maximale du bleu de méthylène), d'un faisceau lumineux traversant cette dernière. La mesure est réalisée au fur et à mesure qu'est ajoutée la solution de bleu de méthylène à la suspension. Au début du dosage, le bleu de méthylène est consommé par les argiles donc n'atténue pas le signal lumineux. Puis, lorsque l'adsorption maximale du sable est atteinte, du bleu résiduel reste en solution et l'intensité du signal spectrophotométrique chute. La valeur de bleu est atteinte.

Toutefois, les méthodes susmentionnées ne permettent qu'un contrôle insuffisant de la propreté des sables, compte tenu notamment des variations possibles de cette propreté lors de l'exploitation en carrière. De plus elles possèdent des temps de réponse longs.

Il existe donc un réel besoin d'améliorer le contrôle de la propreté des sables ainsi que d'améliorer la propreté des sables produits.

### RESUME DE L'INVENTION

L'invention concerne en premier lieu un procédé de production de sable comprenant :
- l'extraction de sable d'une carrière;
- le prélèvement périodique, en ligne et automatisé d'un échantillon de sable ;
- la mesure automatisée de la valeur de bleu de méthylène de l'échantillon de sable.
- le mélange du sable avec un agent inertant.

Selon un mode de réalisation particulier, la mesure automatisée de la valeur de bleu de méthylène comprend une mesure automatisée de la valeur de bleu de méthylène dans une solution aqueuse et / ou une mesure automatisée de la valeur de bleu de méthylène dans un mélange d'eau et de di-éthylène glycol.

Selon un mode de réalisation particulier, en fonction du résultat de la mesure de la valeur de bleu de méthylène, le sable est lavé et / ou inerté et / ou trié et / ou l'extraction est modifiée.

Selon un mode de réalisation particulier, le prélèvement de l'échantillon et la mesure de la valeur de bleu de méthylène sont effectués au moins une fois par semaine, de préférence au moins une fois par jour, de manière plus particulièrement préférée au moins une fois par heure, idéalement environ une fois toutes les dix minutes.

Selon l'invention, le sable produit présente une valeur de bleu de méthylène comprise dans une gamme prédéterminée.

Selon un mode de réalisation particulier, le mélange du sable avec un agent inertant est effectué en amont et / ou en aval du prélèvement d'échantillon de sable.

Selon un mode de réalisation particulier, la quantité d'agent inertant lors du mélange est ajustée en fonction de la mesure de la valeur de bleu de méthylène et de manière à ce que le sable issu du mélange présente une valeur de bleu de méthylène comprise dans la gamme prédéterminée.

Selon un mode de réalisation particulier, l'agent inertant est choisi parmi des molécules cationiques et principalement polycationiques, principalement de type polyamine, avec ou sans ajout supplémentaire de molécules polyanioniques, agents fluidifiants du ciment.

Selon un mode de réalisation particulier, le procédé susmentionné comprend l'homogénéisation et / ou le criblage et / ou la division et / ou le séchage de l'échantillon de sable, préalablement à la mesure de la valeur de bleu de méthylène.

Selon un mode de réalisation particulier, la mesure de la valeur de bleu de méthylène comprend :
- le mélange de l'échantillon de sable avec une solution pour former une dispersion ;
- l'injection d'une seule dose de bleu de méthylène dans la dispersion ;
- la séparation de la dispersion en des particules et une fraction liquide ; et
- la détermination sur la fraction liquide de la quantité de bleu de méthylène en excès n'ayant pas réagi avec l'échantillon de sable.

Selon un mode de réalisation particulier, ladite séparation est effectuée par filtration et / ou par sédimentation par ajout d'un agent floculant.

Selon un mode de réalisation particulier, la détermination de la quantité de bleu de méthylène n'ayant pas réagi est effectuée par une mesure d'absorbance et / ou de transmittance.

Selon un mode de réalisation particulier, ladite mesure d'absorbance et / ou de transmittance est effectuée dans une cellule spectrophotométrique ou au moyen d'une phototrode.

Selon un mode de réalisation particulier, ladite mesure d'absorbance et / ou de transmittance est effectuée à une longueur d'onde comprise entre 640 et 680 nm et de préférence 660 nm.

Selon un mode de réalisation particulier, la dose de bleu de méthylène injectée est comprise entre environ 0,1 et environ 20 g de bleu de méthylène sec par kg de sable, de préférence entre environ 5 et environ 10 g de bleu de méthylène sec par kg de sable.

L'invention a d'autre part pour objet une ligne de production de sable comprenant :
- des moyens d'extraction 1 de sable d'une carrière ;
- des moyens de prélèvement périodique et automatisé 6 d'échantillon de sable ;
- des moyens de mesure automatisée 10 de la valeur de bleu de méthylène de l'échantillon de sable.
- des moyens de mélange 4 du sable avec un agent inertant, lesdits moyens de mélange 4 étant situés en amont et / ou en aval des moyens de prélèvement 6 d'échantillon de sable.

Selon un mode de réalisation particulier, la ligne de production de sable susmentionnée comprend :
- des moyens de lavage du sable.

Selon un mode de réalisation particulier, la ligne de production de sable susmentionnée comprend un asservissement 12 entre les moyens de mesure automatisée 10 de la valeur de bleu de méthylène et les moyens de mélange 4 du sable avec un agent inertant.

Selon un mode de réalisation particulier, les moyens de prélèvement 6 d'échantillon de sable comprennent un échantillonneur traversier rotatif ou un échantillonneur traversier pivotant ou un préleveur à tiroir ou un préleveur à vis sans fin.

Selon un mode de réalisation particulier, la ligne de production de sable susmentionnée comprend des moyens d'homogénéisation et / ou de criblage et / ou de division et / ou de séchage 8 de l'échantillon de sable en amont des moyens de mesure 10 de la valeur de bleu de méthylène.

Selon un mode de réalisation particulier, les moyens de mesure 10 de la valeur de bleu de méthylène comprennent :
- un récipient de mélange 21 de l'échantillon de sable avec une solution et avec du bleu de méthylène ;
- des moyens automatisés de dosage et d'injection 24 de bleu de méthylène dans le récipient de mélange 21.

Selon un mode de réalisation particulier, les moyens de mesure 10 de la valeur de bleu de méthylène comprennent des moyens de filtration 27 et / ou des moyens d'injection d'agent floculant 25.

Selon un mode de réalisation particulier, le récipient de mélange 21 est pourvu d'une phototrode.

Selon un mode de réalisation particulier, la ligne de production de sable susmentionnée comprend :
- une cellule de mesure spectrophotométrique 29 ;
- des moyens de circulation 26, 28 du récipient de mélange 21 vers la cellule de mesure 29 et des moyens de circulation 30 de la cellule de mesure 29 vers le récipient de mélange 21.

L'invention a par ailleurs pour objet un procédé de mesure de la valeur de bleu de méthylène d'un échantillon de sable, comprenant :
- le mélange de l'échantillon de sable avec une solution pour former une dispersion ;
- l'injection d'une seule dose de bleu de méthylène dans la dispersion ;
- la séparation de la dispersion en des particules et une fraction liquide ; et
- la détermination dans la fraction liquide de la quantité de bleu de méthylène en excès n'ayant pas réagi avec l'échantillon de sable.

Ce procédé de mesure est spécialement conçu pour être utilisé dans le cadre du procédé de production de sable susmentionné.

Selon un mode de réalisation particulier, la solution est une solution aqueuse ou un mélange d'eau et de di-éthylène glycol.

Selon un mode de réalisation particulier, la séparation est effectuée par filtration et / ou par sédimentation par ajout d'un agent floculant.

Selon un mode de réalisation particulier, la détermination de la quantité de bleu de méthylène n'ayant pas réagi est effectuée par une mesure d'absorbance et / ou de transmittance.

Selon un mode de réalisation particulier, la mesure d'absorbance et / ou de transmittance est effectuée dans une cellule spectrophotométrique ou au moyen d'une phototrode.

Selon un mode de réalisation particulier, la mesure d'absorbance et / ou de transmittance est effectuée à une longueur d'onde comprise entre 640 et 680 nm et de préférence 660 nm.

Selon un mode de réalisation particulier, la dose de bleu de méthylène injectée est comprise entre environ 0,1 et environ 20 g de bleu de méthylène sec par kg de sable, de préférence entre environ 5 et environ 10 g de bleu de méthylène sec par kg de sable.

La présente invention permet de surmonter les inconvénients de l'état de la technique. Elle fournit plus particulièrement un procédé permettant d'améliorer le contrôle de la propreté du sable de carrière.

Ceci est accompli grâce à la mise au point d'un procédé de production de sable comprenant, de manière intégrée et en ligne, une mesure automatisée de la valeur de bleu de méthylène du sable.

Selon certains modes de réalisation particuliers, l'invention présente également les caractéristiques avantageuses énumérées ci-dessous.
- Il est possible de contrôler la propreté du sable sur le site de production de manière beaucoup plus fréquente que dans la pratique et dans la norme actuelle, et ce de manière simple et économique, essentiellement sans intervention humaine. L'augmentation de la fréquence des mesures permet de suivre au plus près l'évolution de la propreté du sable au fur et à mesure de l'extraction.
- Le procédé selon l'invention est plus fiable et plus précis que les procédés existants de test sur papier-filtre ou de mesure spectrophotométrique manuelle sur une suspension de fines.
- Le mode de réalisation selon lequel on effectue un surdosage du bleu de méthylène permet un gain de temps considérable par rapport à la méthode d'ajout « goutte à goutte » du bleu de méthylène.
- La mesure du bleu de méthylène sur la ligne de production du sable permet de mettre en place une boucle de rétroaction afin de produire un sable de propreté pré-déterminée, malgré les éventuelles variations de qualité du sable produit dans la carrière.
- L'invention fournit aussi un procédé de production de sable propre, inerté sur la ligne même de production par ajout d'un agent actif agissant spécifiquement sur les impuretés, notamment les argiles. L'ajustement des quantités d'inertant en fonction de la mesure de la valeur de bleu de méthylène permet en outre d'économiser les produits d'inertage qui sont coûteux.
- Finalement, l'invention permet de gagner en productivité et de rendre la totalité de la production de sable utilisable (c'est-à-dire valorisable pour une application donnée). La durée de vie des carrières s'en trouve augmentée.

### BREVE DESCRIPTION DES FIGURES

La **figure 1** représente de manière schématique un exemple de ligne de production selon l'invention.
La **figure 2** représente de manière schématique un exemple de dispositif de mesure automatisée de la valeur de bleu de méthylène, qui est intégré dans la ligne de production selon l'invention.

### DESCRIPTION DE MODES DE REALISATION DE L'INVENTION

L'invention est maintenant décrite plus en détails et de façon non limitative dans la description qui suit.

### Ligne de production de sable de carrière

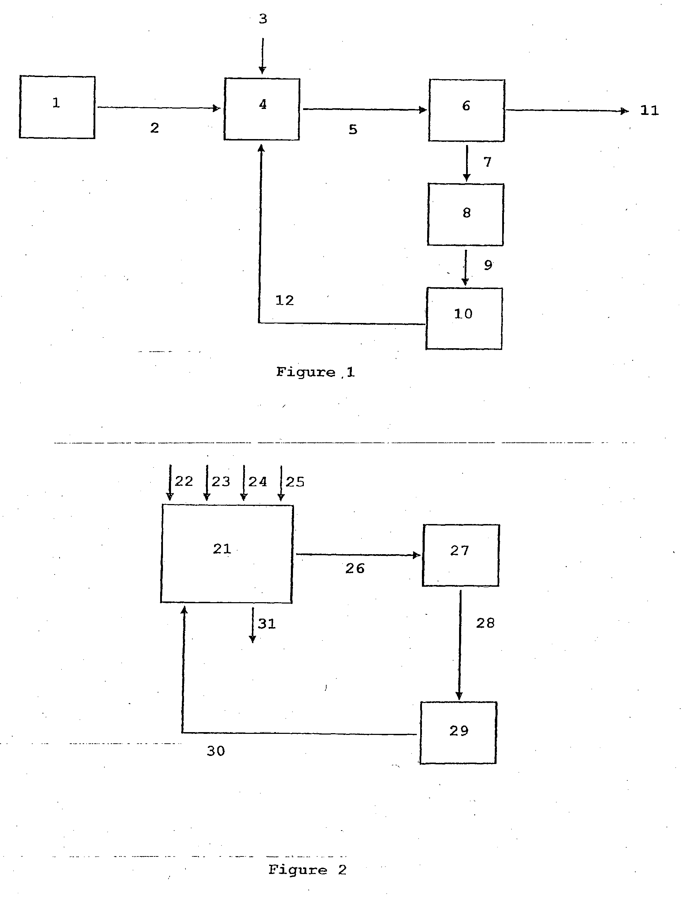

En faisant référence à la figure 1, un exemple de ligne de production de sable de carrière selon l'invention comprend des moyens d'extraction 1. Ces moyens peuvent comporter des phases : d'extraction en carrière de roches massives ou alluvionnaires, de débourbage, de criblage (tamisage), de concassage. Des moyens de convoyage 2 de sable brut (pouvant comprendre des bandes transporteuses, des silos, des trémies, des chutes...) transportent le sable extrait vers des moyens de mélange 4 du sable avec un agent inertant. Les moyens de mélange 4 sont d'autre part alimentés par une ligne d'amenée 3 d'agent inertant. Les moyens de mélange 4 du sable avec un agent inertant peuvent consister en un malaxeur dans lequel est introduit l'agent inertant. Ce dernier sera de préférence pulvérisé sur le sable lors du malaxage. Tout type de malaxeur peut être utilisé. Les buses d'aspersion doivent être choisies en fonction des gammes de débits d'inertant souhaitées et de la géométrie de l'installation. L'inertant peut aussi être directement ajouté dans le matériau à traiter par un écoulement simple si le flux de matière est suffisamment bien canalisé. Le traitement est réalisé de préférence en continu mais peut aussi avoir lieu par batch.

En sortie des moyens de mélange 4 sont prévus des moyens de convoyage 5 de sable inerté. Sur le parcours de ces moyens de convoyage 5 se situent des moyens de prélèvement périodique et automatisé 6 d'un échantillon de sable. Ces moyens de prélèvement 6 sont avantageusement prévus pour prélever une quantité typique de sable d'au moins 200 g, de préférence d'environ 200 à environ 250 g. Le maintien de la représentativité de l'échantillon peut nécessiter que le prélèvement 6 soit bien supérieur à 250 g. Il pourra atteindre plusieurs dizaines de kilogrammes. A cet effet on peut utiliser un échantillonneur tel que ceux commercialisés par les sociétés Penox, Tema, Forratechnic. Les échantillonneurs traversiers rotatifs, linéiques ou pivotants et les préleveurs en conduite permettent de garantir une bonne représentativité des échantillons de sable prélevés vis-à-vis de l'ensemble du sable dans la ligne de production ; ils permettent de limiter les problèmes de ségrégation liés à l'hétérogénéité de l'approvisionnement. Toutefois, d'autres échantillonneurs tels que les préleveurs à tiroir, les préleveurs par vis sans fin, les préleveurs à volet, les préleveurs sur bande peuvent être préférés en raison de leur moindre prix et de leur simplicité.

La ligne de production comprend encore, en aval des moyens de prélèvement 6, des moyens de convoyage 11 du sable produit, qui peuvent par exemple alimenter un système de conditionnement du sable. Par ailleurs, en sortie des moyens de prélèvement 6 sont prévus des moyens de convoyage 7 de l'échantillon de sable. Ces moyens de convoyage 7 alimentent des moyens de traitement 8 de l'échantillon de sable. Ces moyens de traitement 8 peuvent comprendre selon les cas des moyens d'homogénéisation et / ou de criblage et / ou de division et / ou de séchage. Les moyens d'homogénéisation comprennent par exemple un mélangeur. Les moyens de criblage comprennent par exemple un tamis. Les moyens de division comprennent par exemple des systèmes de quartage. Ceux-ci peuvent être des systèmes de quartage simple par gravité ou des quarteurs automatiques de préférence rotatifs. Les moyens de séchage comprennent par exemple des moyens de chauffage. L'ensemble des moyens de prélèvement 6 et des moyens de traitement 8 peuvent être intégrés dans un même appareillage, auquel cas les moyens de convoyage 7 sont réduits au strict minimum, voire absents.

En sortie des moyens de traitement 8 sont prévus des moyens de convoyage 9 de l'échantillon traité qui alimentent des moyens de mesure automatique 10 de la valeur de bleu de méthylène. Un asservissement 12 est prévu, qui permet d'ajuster les paramètres de fonctionnement des moyens de mélange 4 du sable avec l'agent inertant selon le résultat de la mesure obtenu au niveau des moyens de mesure automatique 10 de la valeur de bleu de méthylène.

La position des moyens de mélange 4 en amont des moyens de prélèvement 6 est optionnelle. On peut également prévoir que les moyens de mélange 4 soient situés en aval des moyens de prélèvement 6. Selon cette variante, les moyens de prélèvement 6 sont situés directement sur le trajet des moyens de convoyage 2 de sable extrait. Puis en aval des moyens de prélèvement 6 se trouvent les moyens de mélange 4. L'asservissement 12 entre les moyens de mesure automatisée 10 et les moyens de mélange 4 peut être également présent dans cette variante. Une troisième possibilité consiste à combiner les deux variantes, en prévoyant des premiers moyens de mélange du sable avec un agent inertant en amont des moyens de prélèvement et des deuxièmes moyens de mélange du sable avec un agent inertant en aval des moyens de prélèvement.

Selon une autre variante de la ligne de production, on peut remplacer les moyens de mélange 4 du sable avec un agent inertant par des moyens de lavage du sable, qui peuvent consister en un débourbeur et / ou un ou plusieurs systèmes de séparation de l'eau sale avec le sable (tamis, cyclone, systèmes filtrants...). On peut également utiliser les moyens de mélange en combinaison avec des moyens de lavage.

Selon une autre variante plus simple de la ligne de production selon l'invention, les moyens de mélange 4 du sable avec un agent inertant sont simplement omis.

La ligne de production selon l'invention est par exemple adaptée à une production de sable de l'ordre de 150 tonnes par heure. Le débit de sable n'est pas un paramètre limitatif.

### Procédé de production de sable de carrière

Dans le procédé de production de sable de carrière selon l'invention, du sable est extrait de la carrière à l'aide des moyens d'extraction 1 et transporté par les moyens de convoyage 2. Le sable en question est constitué par des granulats de taille granulométrique moyenne comprise entre 0 et 20 mm, de préférence entre 0 et 4 mm. Il peut être de toute nature minérale, calcaire, siliceuse, silico-calcaire ou autre. Il peut contenir de 0 à 5 % environ en masse d'argiles.

A un certain emplacement sur la ligne de production (avant et / ou après le lavage et / ou l'inertage), un échantillon de sable est prélevé de manière périodique et automatisée.

Par prélèvement périodique on entend que des échantillons de sable successifs sont prélevés à répétition. Il peut s'agir d'un prélèvement à intervalles de temps réguliers, par exemple une fois par semaine ou une fois par jour ou une fois par heure voire une fois toutes les dix minutes ou même encore plus fréquemment. La durée du prélèvement peut aussi être variable, de quelques secondes à plusieurs minutes. Il peut également s'agir d'un prélèvement à intervalles de temps irréguliers. Par exemple on peut diminuer la fréquence des prélèvements si le sable présente des caractéristiques relativement homogènes et constantes ou au contraire augmenter la fréquence des prélèvements si la qualité du sable présente des variations importantes.

Une mesure automatisée de la valeur de bleu de méthylène est ensuite effectuée sur l'échantillon de sable prélevé. L'échantillon de sable peut être éventuellement traité avant d'effectuer cette mesure.

Ainsi, il peut être opportun de cribler (de tamiser) l'échantillon préalablement à la mesure. En effet, on peut souhaiter effectuer la mesure sur une fraction seulement du sable, par exemple sur la fraction 0-2 mm du sable, afin de se conformer aux normes en vigueur. Dans ce cas, l'échantillon de sable est tamisé et seule la partie passante est conservée. De manière typique, on ôte ainsi environ 30 % en masse de l'échantillon, correspondant à la fraction 2-4 mm. Un séchage de l'échantillon avant le criblage peut être réalisé. Celui-ci sera d'autant plus nécessaire que le sable sera sale, humide et que les argiles seront collantes.

Par ailleurs, il peut être opportun de diviser l'échantillon de sable préalablement à la mesure. En effet la mesure doit s'effectuer sur une masse de sable prédéterminée, par exemple entre environ 200 et environ 250 g, plus particulièrement environ 225 g. On peut prévoir que les moyens de prélèvement et éventuellement les moyens de criblage soient adaptés pour fournir un échantillon de masse souhaitée. Sinon, on divise l'échantillon de sable de manière à conserver sa représentativité.

Enfin, si l'échantillon de sable est humide, il peut être opportun de le sécher préalablement à la mesure. Ce séchage peut être par exemple effectué en mettant en place une cuillère chauffante ou un système d'homogénéisation chauffant à 100°C environ. Alternativement, il est possible de réaliser la mesure directement sur le sable humide, ce qui impose de prendre en compte l'humidité dans le calcul de la valeur de bleu de méthylène du sable brut.

La mesure automatisée de la valeur de bleu de méthylène est ensuite effectuée, comme cela est décrit ci-dessous. Le résultat de cette mesure peut avoir pour but de simplement disposer d'une information précise sur la propreté du sable produit, et de contrôler la qualité du sable. Mais le résultat de la mesure peut aussi permettre d'adapter les paramètres de la production de sable, soit par une intervention humaine, soit de façon intégrée et automatisée.

Si le résultat de la mesure révèle que le sable a une propreté insuffisante (valeur de bleu de méthylène supérieure à une valeur de consigne), on peut prévoir :
- de trier le sable, de façon à écarter le sable de propreté insuffisante de la production, ou tout au moins à le destiner à une utilisation finale particulière (moins exigeante sur le plan de la qualité) ; ou
- de modifier l'extraction par exemple en changeant de front de carrière ; ou
- de réaliser un certain nombre d'opérations sur le sable afin d'améliorer sa propreté et sa qualité, par exemple afin de faire en sorte que sa valeur de bleu de méthylène redevienne inférieure à la valeur de consigne.

Dans ce dernier cas, le procédé de production de sable comprend un asservissement (et éventuellement une boucle de rétroaction). Il est donc possible, selon ce mode de réalisation de produire un sable de carrière présentant une valeur de bleu de méthylène comprise dans une gamme (de consigne) prédéterminée, et donc de produire un sable de qualité et de propreté prédéterminées. Cet asservissement peut fonctionner de manière automatisée.

Les opérations susceptibles d'améliorer la propreté du sable sont principalement le lavage (à l'eau ou avec une solution aqueuse), dont la durée et l'intensité peuvent être adaptées en fonction de la mesure de la valeur de bleu de méthylène, et l'inertage.

Par inertage on entend la neutralisation des impuretés telles que les argiles. L'inertage s'effectue en mélangeant le sable avec un agent inertant susceptible de réagir spécifiquement avec les argiles. Des agents inertants convenables sont ceux qui sont décrits dans le document FR 2875496 (demande de brevet français FR 04/09968) ainsi que dans les demandes de brevet français FR 05/06596 et FR 05/06594, déposées par le présent demandeur.

En particulier l'agent inertant utilisé peut être un polymère cationique. L'agent inertant est avantageusement choisi parmi les molécules cationiques contenant un ammonium quaternaire, principalement polycationiques, principalement de type polyamine, en particulier le FL2250 (SNF). L'agent inertant peut également consister en un co-mélange de molécules cationiques et anioniques, ces dernières étant des agents fluidifiants du ciment.

L'inertage du sable peut être effectué par un simple mélange du sable avec l'agent inertant. La dose d'agent inertant injectée peut varier entre 0 et 1 % d'inertant sec dans le sable et de préférence de 0 à 1 g d'inertant sec / kg de sable. Cette dose est de préférence adaptée selon le résultat de la mesure automatique de la valeur de bleu de méthylène, afin de fournir un sable inerté dont la valeur de bleu de méthylène soit inférieure à une valeur de consigne.

Le traitement du sable par lavage et / ou inertage peut s'effectuer en aval du prélèvement de l'échantillon. Dans ce cas, l'inertage vient corriger la propreté du sable produit en fonction de la propreté du sable brut issu de la carrière. La quantité d'agent inertant qui doit être ajoutée pour obtenir une valeur de bleu de méthylène donnée doit également être adaptée en fonction de la nature du sable et plus précisément de la nature des argiles présentes dans le sable.

Dans le cas des sables contenant beaucoup d'argiles, on peut prévoir un premier traitement par lavage et / ou inertage tout de suite après l'extraction, puis un prélèvement d'échantillon et une mesure de la valeur de bleu de méthylène afin de contrôler si le sable traité présente une propreté satisfaisante et ensuite, seulement si cela apparaît nécessaire, un second traitement par lavage et / ou inertage pour achever d'améliorer la propreté du sable.

Il est également possible de prévoir que le sable ne subisse qu'un seul traitement par lavage et / ou inertage tout de suite après l'extraction et en amont du prélèvement d'échantillon. Cette configuration présente le double avantage (i) de fournir une mesure de la valeur de bleu de méthylène réelle du sable finalement produit et commercialisé, et (ii) de permettre malgré tout un ajustement du traitement (notamment un ajustement de la dose d'agent inertant) du futur sable extrait, en fonction du résultat de cette mesure. Cette configuration est particulièrement bien adaptée aux carrières dans lesquelles le sable extrait présente des dérives en terme de qualité suffisamment lentes pour pouvoir être corrigées avec un certain laps de temps de décalage.

Le sable produit par le procédé selon l'invention peut être utilisé pour fabriquer du béton ou pour fabriquer du bitume par exemple.

### Dispositif et procédé particuliers de mesure de la valeur de bleu de méthylène

En faisant référence à la **figure 2****,** un exemple des moyens de mesure 10 automatisée de la valeur de bleu de méthylène comprend un récipient de mélange 21 pourvu de moyens d'agitation, alimenté par une ligne 22 de dosage automatique et d'injection de l'échantillon de sable, une ligne 23 de dosage automatique et d'injection d'eau (ou de solution aqueuse) et une ligne 24 de dosage automatique et d'injection de bleu de méthylène. Le récipient de mélange 21 peut également comprendre une ligne 25 de dosage automatique et d'injection d'agent floculant. Une première ligne de soutirage 26 relie le récipient de mélange 21 à des moyens de filtration 27. Une deuxième ligne de soutirage 28 relie les moyens de filtration 27 à une cellule spectrophotométrique 29. Une troisième ligne de soutirage 30 relie la cellule spectrophotométrique 29 au récipient de mélange 21. Le récipient de mélange 21 est avantageusement pourvu de moyens de vidange 31.

Alternativement, on peut se passer des lignes 26, 28, 30 et de la cellule spectrophotométrique 29 et remplacer le tout par une phototrode directement placée dans le récipient de mélange 21 (ou dans un récipient annexe communiquant avec le récipient de mélange 21).

Le déroulement de la mesure est le suivant : l'échantillon de sable préalablement traité (c'est-à-dire tamisé et / ou divisé et / ou séché) est introduit par la ligne 22 dans le récipient de mélange 21. Il est mélangé sous agitation avec de l'eau ou une solution aqueuse issue de la ligne 23, pour fournir une dispersion (ou suspension). Une dose de bleu de méthylène est ensuite injectée *via* la ligne 24, et la dispersion est à nouveau mélangée. Le bleu de méthylène injecté réagit alors, en tout ou en partie, avec les impuretés argileuses présentes dans le sable. Il s'agit ensuite de mesurer s'il reste du bleu de méthylène en excès n'ayant pas réagi, et si oui quelle quantité. Pour ce faire, on réalise une mesure photométrique par absorbance et / ou par transmittance.

Un premier moyen d'effectuer cette mesure photométrique consiste à faire circuler la dispersion jusque dans la cellule spectrophotométrique 29 où l'absorption et / ou la transmission d'un faisceau lumineux à travers la cellule est mesurée. On peut faire ensuite à nouveau circuler la dispersion de retour dans le récipient de mélange 21.

Un deuxième moyen d'effectuer cette mesure photométrique consiste à utiliser une phototrode. Ceci suppose d'avoir effectué préalablement un étalonnage avec des solutions de bleu de méthylène à diverses concentrations.

Dans les deux cas, il est généralement nécessaire de réaliser la mesure proprement dite sur une phase liquide relativement limpide, ce qui implique une étape de séparation de la dispersion en une phase liquide et en des particules. Cette étape constitue une difficulté supplémentaire par rapport au procédé dit de la « valise de bleu », où l'échantillon de sable est un échantillon très dilué de fines de diamètre inférieur à 80 µm si bien que la mesure est moins perturbée par la présence des particules, lesquelles atténuent le signal.

Cette séparation peut être par exemple réalisée par sédimentation ou par filtration, *via* les moyens de filtration 27, qui peuvent consister en un filtre ou en plusieurs filtres en série (par exemple avec d'abord un filtrage grossier puis un filtrage fin). On peut également, en complément ou en remplacement des moyens de filtration 27, prévoir des moyens de centrifugation. Le récipient de mélange 21 lui-même peut éventuellement être directement centrifugé. Une troisième méthode qui peut être utilisée en complément ou en remplacement des deux précédentes est la floculation. En effet l'injection d'un agent floculant *via* la ligne 25 permet de faire sédimenter en quelques minutes et généralement en quelques secondes les particules les plus fines de la dispersion, les plus grosses sédimentant rapidement sous l'effet de leur propre poids. Les agents floculants sont sélectionnés parmi les produits usuellement utilisés dans l'industrie des granulats pour faire floculer les fines de sables dans les eaux chargées issues du lavage des matériaux. Généralement, les floculants non-ioniques ou cationiques sont préférés car ils présentent moins de risques de réagir avec la molécule cationique de bleu de méthylène. A titre d'exemple d'agent floculant utilisable ici, on peut citer le Praestol 2300D (DEGUSSA), le FA920 (SNF) et le AN905 (SNF). En tout état de cause les filtres ou l'agent floculant sont choisis de telle sorte qu'ils soient efficaces avec le type de sable et d'argiles considérés et qu'ils n'interagissent pas avec le bleu de méthylène.

Le dosage en agent floculant sec est généralement compris entre 0,1 et 100 ppm et de préférence entre 1 et 20 ppm.

L'injection de bleu de méthylène peut se faire en plusieurs fois, en répétant les opérations ci-dessus et avec une mesure photométrique après chaque injection jusqu'à la détermination de la valeur de bleu de méthylène, de manière similaire à ce qui est connu dans le cadre de la méthode turbidimétrique (cf Norme P18-595). Mais il est également possible de se contenter d'une seule mesure photométrique, à condition d'effectuer un surdosage en bleu de méthylène, c'est-à-dire d'injecter une unique dose de bleu de méthylène en excès par rapport à la quantité nécessaire pour réagir avec les argiles du sable, et de mesurer alors directement la quantité de bleu de méthylène n'ayant pas réagi pour en déduire la quantité de - bleu de méthylène ayant réagi et donc la valeur de bleu de méthylène (égale à la quantité en g de bleu de méthylène adsorbé par kg de sable). Par exemple la dose unique de bleu de méthylène peut être comprise entre 0,1 et 20 g de bleu de méthylène par kg de sable et de préférence comprise entre 5 et 10 g par kg de sable et peut être choisi plus précisément en fonction de la gamme de propreté qui est attendue pour un sable donné. Par exemple, une quantité de 1 g de bleu de méthylène pour 250 g de sable peut convenir si la valeur au bleu du sable est toujours inférieure à 4 g par kg de sable.

Etant donné que la mesure photométrique s'effectue alors sur une dispersion qui apparaît comme saturée en bleu de méthylène, et compte tenu de la sensibilité de l'appareil de mesure, il peut être utile ou nécessaire de prendre plusieurs mesures et notamment :
- de diluer la dispersion préalablement à la mesure de sorte que la concentration en bleu de méthylène dans la dispersion reste de l'ordre de quelques ppm au maximum (typiquement moins de 10 ppm pour une mesure avec un spectrophotomètre ou moins de 5 ppm avec une phototrode) et / ou
- d'effectuer les étalonnages en absorbance plutôt qu'en transmittance, car la transmittance est proportionnelle à l'intensité lumineuse mesurée alors que l'absorbance varie avec le logarithme de l'intensité lumineuse mesurée (ceci permet typiquement d'élargir la gamme de concentrations mesurables de 0-4 ppm à 0-8 ppm) et / ou
- soit de travailler avec un faisceau lumineux de longueur d'onde comprise entre 640 et 680 nm, de préférence 660 nm (qui correspond à la valeur d'absorption maximale du bleu de méthylène), soit de travailler plutôt à une longueur d'onde décalée par rapport au pic d'absorption, par exemple à une longueur d'onde d'environ 590 nm, afin de diminuer la sensibilité de la mesure.

La méthode de mesure par surdosage permet un gain de temps considérable par rapport à la méthode du « goutte à goutte » (ajout progressif de volumes donnés de solution de bleu). Le procédé de mesure de la valeur de bleu de méthylène d'un échantillon de sable décrit ici est spécialement adapté pour être utilisé dans le cadre du procédé de production de sable selon l'invention et pour être mis en oeuvre sur la ligne de production de l'invention. Mais ce procédé de mesure peut également être utilisé de manière indépendante, par exemple pour effectuer des tests en laboratoire.

A la fin de la mesure automatisée, le système doit être nettoyé en vue de la réception de l'échantillon suivant. Notamment le récipient de mélange 21 est vidangé par la ligne 31, et éventuellement lavé à l'eau grâce à la ligne 23.

### Mesure spécifique de la valeur de bleu de méthylène dans un mélange eau/di-éthylène glycol (en particulier 50/50 en masse)

Pour des informations complémentaires sur cette méthode de mesure, on se rapportera à A.I.G. Yool and coll., Cement and Concrete Research, Vol. 28, n°10, pp 1417-1428, 1998.

Selon une variante de l'invention, il est possible de déterminer la capacité d'absorption d'un sable, vis-à-vis du bleu de méthylène, non plus dans l'eau, mais dans un mélange contenant de l'eau et du di-éthylène glycol, en particulier 50% masse d'eau et 50% masse de di-éthylène glycol. On appelle MBV_{DEC} cette nouvelle valeur.

Les présents inventeurs ont montré que la MBV_{DEG} est quasiment égale à la valeur de bleu standard (Norme EN NF 933-9) dans le cas où le sable contient des argiles non gonflantes (illite, kaolinite,...), mais qu'elle diminue fortement (d'un facteur voisin de 2) lorsque le sable contient des argiles gonflantes.

Moyennant la réalisation de courbes d'étalonnage avec différentes natures d'argiles, et en mesurant la différence entre la valeur au bleu standard (MBV) et la MBV_{DEG}, il est possible d'évaluer la teneur en argiles gonflantes d'un sable qui aurait subi les deux mesures.

En considérant la variation moyenne des valeurs de bleu standard pour chaque nature d'argiles en fonction de leur teneur, il est également possible de calculer une teneur approximative en argile non gonflante du sable. Les évaluations des teneurs en argile peuvent être améliorées par une bonne connaissance des gisements et des argiles polluant ces derniers. On peut donc choisir des courbes d'étalonnage correspondant aux argiles majoritairement rencontrées sur chaque site.

Cette méthode au di-éthylène glycol peut être utilisée dans le cadre de la présente invention en ajoutant une ligne de dosage automatique et d'injection de di-éthylène glycol dans le récipient de mélange 21. L'utilisation dans le cadre de l'invention d'une mesure de bleu de méthylène dans l'eau ou eh solution aqueuse (MBV) et d'une mesure de bleu de méthylène dans un mélange eau / di-éthylène glycol (MBV_{DEG}) permet donc d'estimer la teneur de diverses natures d'argiles dans le sable.

Si l'on souhaite effectuer simultanément les deux mesures MBV et MBV_{DEG}, deux appareillages automatiques sont nécessaires sur la ligne. Le système d'échantillonnage est adapté en conséquence.

### EXEMPLES

Les exemples suivants illustrent l'invention sans la limiter.

### Exemple 1 - Mesure de la valeur de bleu de méthylène par surdosage

On effectue des mesures de la valeur de bleu de méthylène par surdosage à l'aide d'une phototrode (Phototrode^{™} DP5 (METTLER-TOLEDO)).

La phototrode est préalablement étalonnée avec des solutions aqueuses de bleu de méthylène à 0, 0,5, 1, 1,5, 2, 3 et 4 mg/L (tension mesurée entre environ 1500 mV et environ 130 mV respectivement).

Le protocole de mesure est le suivant :
1) Pesée de 200 à 250 g de sable de 0-2 mm et mise en place dans un bécher.
2) Ajout de 500 mL d'eau.
3) Agitation de la suspension.
4) Ajout de 100 g d'une solution de bleu de méthylène à 10 g/L avec un doseur de précision.
5) Agitation de la suspension.
6) Pompage de quelques mL de la suspension dans un tube.
7) Centrifugation pendant quelques minutes à 4500 tours/min.
8) Récupération du surnageant et dilution de 100 µL de surnageant dans 100 mL d'eau (dilution à 1/1000).
9) Mise en place de la phototrode dans la solution et mesure spectrophotométrique.
10) Calcul de la valeur de bleu de méthylène du sable (égale à la quantité en g de bleu de méthylène adsorbé par kg de sable).
11) Nettoyage automatique de la phototrode.
12) Vidange et nettoyage du bécher.

Un exemple de résultat de mesure pour différents échantillons de sable numérotés de 1 à 6 (Sable calcaire 0-4 mm provenant de la carrière Lafarge de l'Estaque / Bouches du Rhône) est résumé dans le **tableau 1** ci-dessous.

**Tableau 1 - Résultats de mesure de la valeur de bleu de méthylène par surdosage**

| **Echantillon** | **Signal phototrode** | **Absorbance** | **Concentration en bleu de méthylène dans la dilution** | **Valeur au bleu de méthylène (g/kg sable)** |
|---|---|---|---|---|
| 250 g sable 1 : sable lavé | 530 mV | 0,452 | 1,66 ppm | 0,00 |
| 250 g sable 2 | 626 mV | 0,380 | 1,40 ppm | 0,64 |
| 250 g sable 3 | 750 mV | 0,301 | 1,11 ppm | 1,34 |
| 250 g sable 4 | 958 mV | 0,195 | 0,72 ppm | 2,27 |
| 250 g sable 5 | 1315 mV | 0,057 | 0,21 ppm | 3,50 |
| 250 g sable 6 : MBV*=5 | 1501 mV | 0,000 | 0 ppm | >4,00 |

| | | | | |
|---|---|---|---|---|
| * Valeur au bleu de méthylène obtenue suivant la norme NF EN 933-9. | | | | |

Par ailleurs, afin de valider que la valeur de bleu de méthylène mesurée par cette méthode est la même que la valeur de bleu de méthylène obtenue par une méthode traditionnelle, on a réalisé des tests en parallèle par la méthode de la tache (NF EN 933-9) et par la méthode ci-dessus de mesure spectrophotométrique par surdosage.

Ces tests ont été réalisés à partir d'échantillons de sable très propre (sable calcaire 0-4 mm provenant de la carrière Lafarge de l'Estaque, lavé au laboratoire, séché à 105°C puis tamisé à 2 mm), additionnés d'argile, à savoir respectivement 1 % de montmorillonite (montmorillonite bleue de Sardaigne (SOCODIS)), 2 % d'illite (illite du Puy (SOCODIS)) et 3 % de kaolinite (kaolinite type BS3 (AGS)). Les résultats sont résumés dans le **tableau 2** ci-dessous et démontrent la fiabilité de la méthode du surdosage. Notons que les MBV sont mesurées sur la fraction 0-2 mm du sable mais rapportées au sable total = MBV₀₋₄.

**Tableau 2 - comparaison de la valeur de bleu de méthylène mesurée par le test de la tache ou par surdosage**

| **Echantillon** | **MBV₀₋₄ (test de la tache) (g de bleu/kg sable 0-4mm)** | **MBV₀₋₄ (mesure par surdosage) (g de bleu/kg sable 0-4mm)** |
|---|---|---|
| Sable + montmorillonite | 1,9 | 1,84 |
| Sable + illite | 1,2 | 1,12 |
| Sable + kaolinite | 0,8 | 0,80 |

Dans un autre test, des floculants ont été utilisés pour faciliter la phase de filtration de la suspension de sable nécessaire avant la mesure à la phototrode. Les résultats, résumés dans le **tableau 3** suivant, montrent que la valeur au bleu d'un sable pollué par un mélange de 3 argiles différentes n'est pas affectée par la présence des floculants choisis.

Ces tests ont été réalisés sur la fraction 0-2 mm d'échantillons de sable très propre (sable calcaire 0-4 mm provenant de la carrière Lafarge de l'Estaque, lavé au laboratoire et séché à 105°C), additionnés d'un mélange d'argiles (0,95 % de montmorillonite (montmorillonite bleue de sardaigne (SOCODIS)) + 1,9 % d'illite (illite du Puy (SOCODIS)) + 1,9 % de kaolinite (kaolinite type BS3 (AGS)).

**Tableau 3 - comparaison de la valeur de bleu de méthylène mesurée par le test de la tache avec ou sans floculant**

| **Masse de sable argileux** | **Type de floculant** | **Concentration en floculant** | **Valeur au bleu de méthylène (g/kg sable)** |
|---|---|---|---|
| 257,2 g | Néant | 0 ppm | 3,4 |
| 257,2 g | Praestol 2300D (DEGUSSA) | 20,00 ppm | 3,4 |
| 257,2 g | FA 920 (SNF) | 20,00 ppm | 3,4 |
| 257,2 g | AN 905 (SNF) | 6,00 ppm | 3,1 |
| 257,2 g | AN 905 (SNF) | 12,00 ppm | 3,3 |
| 257,2 g | AN 905 (SNF) | 20,00 ppm | 3,2 |

### Exemple 2 - Régulation de la valeur de bleu de méthylène d'un sable

Afin de pouvoir réguler efficacement la valeur de bleu de méthylène d'un sable (donc sa propreté), il faut connaître de manière approximative la nature des argiles qu'il contient.

En faisant diverses expériences de diminution de la valeur de bleu de méthylène d'un sable propre additionné d'une quantité donnée d'une argile d'une certaine nature, et ce au moyen d'un agent inertant donné, on peut calculer l'aptitude de cet agent inertant à faire diminuer d'une unité la valeur de bleu de méthylène selon la nature de l'argile.

Par exemple, pour l'agent inertant FL2250 (SNF), on a calculé que la proportion d'agent inertant sec par rapport au sable nécessaire à faire diminuer d'une unité la valeur de bleu de méthylène est de :
- 480 ppm pour la montmorillonite pure (75% dans la montmorillonite bleue de Sardaigne);
- 690 ppm pour l'illite pure (85% dans l'illite du puy);
- 680 ppm pour la kaolinite pure (90% dans la kaolinite type BS3).

En cas de mélange d'argiles, on a mis en évidence que le FL2250 présente une affinité supérieure pour l'argile de type gonflante (montmorillonite), de telle sorte que l'agent inertant neutralise d'abord cette argile gonflante avant de neutraliser, si sa quantité est suffisante, les argiles non gonflantes.

### Exemple 3 - Utilisation de la valeur de bleu de méthylène dans une solution de di-éthylène glycol pour évaluer les quantités de diverses natures d'argiles dans un sable

Cet exemple a pour but de montrer comment est réalisée l'évaluation de la teneur en argiles gonflantes d'une part et en argiles non gonflantes d'autre part.

Le calcul est basé sur la différence de valeur de bleu de méthylène entre une mesure standard (norme NF EN 933-9) et une mesure à la tache conduite strictement de la même façon dans un mélange d'eau et de di-éthylène glycol à 50% en masse.

Les matériaux utilisés sont des échantillons de sable très propre (sable calcaire 0-4 mm provenant de la carrière Lafarge de l'Estaque, lavé au laboratoire, séché à 105°C puis tamisé à 2 mm), additionnés d'argiles (montmorillonite bleue de Sardaigne (SOCODIS) contenant 75% de montmorillonite pure ou kaolinite type BS3 (AGS) contenant 90% de kaolinite pure).

Les résultats obtenus sont résumés dans le **tableau 4** suivant. Notons que les MBV sont mesurées sur la fraction 0-2 mm du sable mais rapportées au sable total = MBV₀₋₄.

**Tableau 4 - comparaison des valeurs de bleu de méthylène mesurées dans l'eau et dans une solution de di-éthylène glycol en présence d'argiles de nature différente**

| **Echantillon** | **NMV₀₋₄ (g de bleu/kg sable 0-4mm)** | **MBV_{DEG0-4} (g de bleu/kg sable 0-4mm)** | **Ecart entre les deux valeurs** |
|---|---|---|---|
| Sable 0-4 mm lavé | 0 | 0 | 0 |
| Sable 0-4 mm lavé + 1 % montmo. pure | 2,65 | 1,3 | 1,35 |
| Sable 0-4 mm lavé + 2% montmo. pure | 5,2 | 2,55 | 2,65 |
| Sable 0-4 mm lavé + 3% montmo. pure | 8,0 | 4,0 | 4,00 |
| Sable 0-4 mm lavé + 2% kaol. pure | 0,60 | 0,43 | 0,17 |
| Sable 0-4 mm lavé + 4% kaol. pure | 1,19 | 0,86 | 0,33 |
| Sable 0-4 mm lavé + 6% kaol. pure | 1,82 | 1,31 | 0,51 |

On montre d'une part que les valeurs de bleu de méthylène des sables contenant des argiles gonflantes de type montmorillonite sont beaucoup plus fortes que celles des argiles non gonflantes telles que la kaolinite, et d'autre part que les écarts entre les valeurs de bleu dans l'eau et dans la solution de di-éthylène glycol sont là encore bien supérieurs avec les argiles gonflantes (facteur environ égal à 16 à teneur en impuretés identique).

Le **tableau 5** suivant reprend des mesures faites sur des sables propres volontairement pollués par des mélanges d'argiles pures. Deux échantillons de sables industriels provenant de la carrière de l'Estaque ont aussi été analysés.

**Tableau 5 - Mesures de bleu de méthylène dans l'eau ou dans une solution de Di-éthylène Glycol de sables volontairement pollués ou de sables industriels**

| **Echantillon** | **MBV₀₋₄ (g de bleu/kg sable 0-4mm)** | **MBV_{DEG 0-4} (g de bleu/kg sable 0-4mm)** | **Ecart entre les deux valeurs** |
|---|---|---|---|
| Sable 0-4 mm lavé + 1% de montmo. pure + 1% de kaolinite pure | 2,95 | 1,5 | 1,45 |
| Sable 0-4 mm lavé + 2% de montmo. pure + 2% de kaolinite pure | 5,9 | 3,05 | 2,85 |
| Sable 7 | 2,0 | 1,0 | 1,0 |
| Sable 8 | 4,2 | 2,4 | 1,8 |

La première étape du calcul consiste à utiliser les résultats du **tableau 5** et à considérer que l'écart entre les valeurs de bleu dans l'eau et dans la solution de di-éthylène glycol est complètement attribuable à l'argile gonflante. Les résultats sont résumés dans le **tableau 6** suivant.

**Tableau 6 - Evaluation de la teneur en argiles gonflantes de sables volontairement pollués ou de sables industriels**

| **Echantillon** | **Ecart entre MBV₀₋₄ et MBV_{DEG 0-4}** | **Teneur en argiles gonflantes (%/sable 0-4 mm)** |
|---|---|---|
| Sable 0-4 mm lavé + 1% de montino. pure + 1% de kaol. pure | 1,45 | 1,05 |
| Sable 0-4 mm lavé + 2% de montmo.pure + 2% de kaol. pure | 2,85 | 2,1 |
| Sable 7 | 1,0 | 0,75 |
| Sable 8 | 1,8 | 1,35 |

La seconde étape consiste à utiliser les résultats du **tableau 6** (teneur en argiles gonflantes) et ceux du **tableau 4** (MBV par nature d'argile et en fonction de leur teneur). Il s'agit alors de calculer la contribution des argiles gonflantes dans la valeur de bleu de méthylène du sable et à attribuer la différence entre la MBV du sable et la MBV des argiles gonflantes à la MBV des argiles non gonflantes. Le **tableau 7** suivant reprend les résultats obtenus.

**Tableau 7 - Evaluation de la teneur en argiles non gonflantes de sables volontairement pollués ou de sables industriels (premier calcul)**

| **Echantillon** | **Teneur argiles gonflantes (%/sable 0-4 mm)** | **MBV₀₋₄ attribuable aux argiles gonflantes** | **MBV₀₋₄ attribuable aux argiles non gonflantes** | **Teneur argiles non gonflantes (%/sable 0-4 mm)** |
|---|---|---|---|---|
| Sable 0-4 mm lavé + 1% montmo. pure + 1% kaol. pure | 1,05 | 2,85 | 0,1 | 0,35 |
| Sable 0-4mm lavé + 2% montmo. pure + 2% kaol. pure | 2,1 | 5,6 | 0,3 | 1,0 |
| Sable 7 | 0,75 | 1,95 | 0,05 | 0,1 |
| Sable 8 | 1,35 | 3,55 | 0,65 | 2,2 |

Les résultats obtenus après ce premier calcul montrent que l'évaluation est tout à fait convenable pour les argiles gonflantes (les plus néfastes dans les bétons). Par contre l'estimation des teneurs en argiles non gonflantes est moins bonne.

Notons que, comme l'écart des valeurs de bleu dans l'eau et dans la solution du di-éthylène glycol, pour les argiles non gonflantes, n'est pas strictement nul, une série d'itérations successives est réalisée afin de minimiser les écarts et ainsi affiner le calcul. La démarche consiste à prendre la première évaluation des teneurs en argiles non .gonflantes puis à calculer l'écart «MBV₀₋₄ - MBV_{DEG 0-4}» correspondant puis de le retrancher de la différence réellement mesurée pour l'évaluation de la teneur en argiles gonflantes. Le calcul se poursuit alors comme explicité page 28. Les résultats de la première itération sont donnés dans le **tableau** 8 et le **tableau 9** suivants.

**Tableau 8 - Calcul d'évaluation de la teneur en argiles non gonflantes de sables volontairement pollués ou de sables industriels (première itération)**

| **Echantillon** | **Teneur en argiles non gonflantes issue du premier calcul (%/sable 0-4mm)** | **Ecart entre MBV₀₋₄ et MBV_{DEG0-4} attribuable aux argiles non gonflantes** | **Ecart entre MBV₀₋₄ et MBV_{DEG 0-4} attribuable aux argiles gonflantes (itération 1)** |
|---|---|---|---|
| Sable 0-4 mm lavé + 1% montmo. pure + 1% kaol. pure | 0,35 | 0,03 | 1,42 |
| Sable 0-4 mm lavé + 2% montmo. pure + 2% kaol. pure | 1,0 | 0,08 | 2,77 |
| Sable 7 | 0,1 | 0,01 | 0,99 |
| Sable 8 | 2,2 | 0,19 | 1,61 |

**Tableau 9 - Evaluation de la teneur en argiles non gonflantes de sables volontairement pollués ou de sables industriels (après la première itération)**

| **Echantillon** | **Teneur argiles gonflantes (%/sable 0-4mm (itération 1)** | **MBV₀₋₄ attribuable aux argiles gonflantes (itération 1)** | **MBV₀₋₄ attribuable aux argiles non gonflantes (itération 1)** | **Teneur argiles non gonflantes (%/sable 0-4mm) (itération 1)** |
|---|---|---|---|---|
| Sable 0-4 mm lavé + 1% montmo. pure + 1% kaol. pure | 1,05 | 2,8 | 0,16 | 0,5 |
| Sable 0-4 + 2% montmo. pure + 2% kaol. pure | mm lavé 2,05 | 5,45 | 0,47 | 1,55 |
| Sable 7 | 0,75 | 1,95 | 0,06 | 0,2 |
| Sable 8 | 1,20 | 3,15 | 1,03 | 3,4 |

Les itérations sont poursuivies jusqu'à ce que l'écart entre les estimations des teneurs en argiles soit minimum. Les résultats obtenus après 5 à 6 itérations sont résumés dans le **tableau 10** suivant.

**Tableau 10 - Evaluation de la teneur en argiles non gonflantes de sables volontairement pollués ou de sables industriels (après 6 itérations)**

| **Echantillon** | **Teneur en argiles gonflantes (%/sable 0-4mm)** | **Teneur en argiles non gonflantes (%/sable 0-4mm)** |
|---|---|---|
| Sable 0-4mm lavé + 1% montmo. pure + 1% kaol. pure | 1,05 | 0,75 |
| Sable 0-4mm lavé + 2% montmo. pure + 2% kaol. pure | 2,0 | 2,15 |
| Sable 7 | 0,7 | 0,25 |
| Sable 8 | 1,05 | 4,75 |

Comme on peut le voir les estimations des teneurs en argiles non gonflantes sont nettement améliorées car on retrouve quasiment les concentrations des argiles introduites dans les sables de référence pollués.

## Revendications

1. Procédé de production de sable, dans lequel le sable produit présente une valeur de bleu de méthylène comprise dans une gamme prédéterminée, ledit procédé comprenant :
- l'extraction de sable d'une carrière ;
- le prélèvement périodique, en ligne et automatisé d'un échantillon de sable ;
- la mesure automatisée de la valeur de bleu de méthylène de l'échantillon de sable ;
- le mélange du sable avec un agent inertant.

2. Procédé selon la revendication 1, dans lequel la mesure automatisée de la valeur de bleu de méthylène comprend une mesure automatisée de la valeur de bleu de méthylène dans une solution aqueuse et / ou une mesure automatisée de la valeur de bleu de méthylène dans un mélange d'eau et de di-éthylène glycol.

3. Procédé selon l'une des revendications 1 ou 2, dans lequel le mélange du sable avec un agent inertant est effectué en amont et/ou en aval du prélèvement d'échantillon de sable.

4. Procédé selon l'une des revendications 1 à 3, dans lequel la quantité d'agent inertant lors du mélange est ajustée en fonction de la mesure de la valeur de bleu de méthylène et de manière à ce que le sable issu du mélange présente une valeur de bleu de méthylène comprise dans la gamme prédéterminée.

5. Procédé selon l'une des revendications 1 à 4, dans lequel l'agent inertant est choisi parmi des molécules cationiques et principalement polycationiques, principalement de type polyamine, avec ou sans ajout supplémentaire de molécules polyanioniques, agents fluidifiants du ciment.

6. Procédé selon l'une des revendications 1 à 5, comprenant l'homogénéisation et / ou le criblage et / ou la division et / ou le séchage de l'échantillon de sable, préalablement à la mesure de la valeur de bleu de méthylène.

7. Procédé selon l'une des revendications 1 à 6, dans lequel la mesure de la valeur de bleu de méthylène comprend :
- le mélange de l'échantillon de sable avec une solution pour former une dispersion ;
- l'injection d'une seule dose de bleu de méthylène dans la dispersion ;
- la séparation de la dispersion en des particules et une fraction liquide ; et
- la détermination sur la fraction liquide de la quantité de bleu de méthylène en excès n'ayant pas réagi avec l'échantillon de sable.

8. Procédé selon la revendication 7, dans lequel la détermination de la quantité de bleu de méthylène n'ayant pas réagi est effectuée par une mesure d'absorbance et / ou de transmittance.

9. Ligne de production de sable comprenant :
- des moyens d'extraction (1) de sable d'une carrière ;
- des moyens de prélèvement périodique et automatisé (6) d'échantillon de sable ;
- des moyens de mesure automatisée (10) de la valeur de bleu de méthylène de l'échantillon de sable
- des moyens de mélange (4) du sable avec un agent inertant, lesdits moyens de mélange (4) étant situés en amont et/ou en aval des moyens de prélèvement (6) d'échantillon de sable.

10. Ligne de production selon la revendication 9, comprenant un asservissement (12) entre les moyens de mesure automatisée (10) de la valeur de bleu de méthylène et les moyens de mélange (4) du sable avec un agent inertant.

11. Ligne de production selon la revendication 9 ou 10, dans laquelle les moyens de mesure (10) de la valeur de bleu de méthylène comprennent :
- un récipient de mélange (21) de l'échantillon de sable avec une solution et avec du bleu de méthylène ;
- des moyens automatisés de dosage et d'injection (24) de bleu de méthylène dans le récipient de mélange (21).

12. Ligne de production selon la revendication 11, dans laquelle le récipient de mélange (21) est pourvu d'une phototrode.

13. Ligne de production selon la revendication 11, comprenant :
- une cellule de mesure spectrophotométrique (29) ;
- des moyens de circulation (26, 28) du récipient de mélange (21) vers la cellule de mesure (29) et des moyens de circulation (30) de la cellule de mesure (29) vers le récipient de mélange (21).

## Patentansprüche

1. Verfahren zur Gewinnung von Sand, wobei der gewonnene Sand einen Methylenblauwert in einem vorbestimmten Bereich aufweist, wobei das Verfahren Folgendes umfasst:
- Abbau von Sand in einem Steinbruch;
- verfahrensintegrierte und automatisierte Entnahme einer Sandprobe in regelmäßigen Abständen;
- automatisiertes Messen des Methylenblauwerts der Sandprobe;
- Vermischen des Sandes mit einem Inertisierungsmittel.

2. Verfahren nach Anspruch 1, wobei das automatisierte Messen des Methylenblauwerts ein automatisiertes Messen des Methylenblauwerts in einer wässrigen Lösung und/oder ein automatisiertes Messen des Methylenblauwerts in einer Mischung aus Wasser und Diethylenglykol umfasst.

3. Verfahren nach einem der Ansprüche 1 oder 2, wobei das Vermischen des Sandes mit einem Inertisierungsmittel der Entnahme der Sandprobe vorgeschaltet und/oder nachgeschaltet ist.

4. Verfahren nach einem der Ansprüche 1 bis 3, wobei die Menge des Inertisierungsmittels beim Vermischen in Abhängigkeit von der Messung des Methylenblauwerts eingestellt wird, und zwar derart, dass der beim Vermischen erhaltene Sand einen Methylenblauwert in dem vorbestimmten Bereich aufweist.

5. Verfahren nach einem der Ansprüche 1 bis 4, wobei das Inertisierungsmittel aus den kationischen, und zwar hauptsächlich den polykationischen, Molekülen ausgewählt ist, welche hauptsächlich vom Typ Polyamin sind, wobei darüber hinaus polyanionische Moleküle, Fließmittel für Zement, zugesetzt werden oder nicht.

6. Verfahren nach einem der Ansprüche 1 bis 5, umfassend die Homogenisierung und/oder Sichtung und/oder Aufteilung und/oder Trocknung der Sandprobe vor dem Messen des Methylenblauwerts

7. Verfahren nach einem der Ansprüche 1 bis 6, wobei das Messen des Methylenblauwerts Folgendes umfasst:
- Vermischen der Sandprobe mit einer Lösung, um eine Dispersion zu bilden;
- Zuführen einer Einzeldosis Methylenblau in die Dispersion;
- Auftrennen der Dispersion in Partikel und in eine flüssige Fraktion; und
- Bestimmen der überschüssigen Menge an Methylenblau, die in der flüssigen Fraktion vorliegt und nicht mit der Sandprobe reagiert hat.

8. Verfahren nach Anspruch 7, wobei die Bestimmung der Menge an Methylenblau, die nicht reagiert hat, mittels einer Messung des Absorptions- und/oder Durchlässigkeitsmaßes erfolgt.

9. Sandgewinnungslinie, die Folgendes umfasst:
- Mittel (1) zum Abbau von Sand in einem Steinbruch;
- Mittel (6) zur automatisierten Sandprobenentnahme einer in regelmäßigen Abständen;
- Mittel (10) zum automatisierten Messen des Methylenblauwerts der Sandprobe
- Mittel (4) zum Vermischen des Sandes mit einem Inertisierungsmittel, wobei die Mischmittel (4) den Mitteln (6) zur Sandprobenentnahme vorgeschaltet und/oder nachgeschaltet sind.

10. Gewinnungslinie nach Anspruch 9, die zwischen den Mitteln (10) zum automatisierten Messen des Methylenblauwerts und den Mitteln (4) zum Vermischen des Sandes mit einem Inertisierungsmittel ein Regelglied (12) umfasst.

11. Gewinnungslinie nach Anspruch 9 oder 10, wobei die Mittel (10) zum Messen des Methylenblauwerts Folgendes umfassen:
- einen Behälter (21) zum Vermischen der Sandprobe mit einer Lösung und mit Methylenblau;
- automatisierte Mittel (24) zum Dosieren und Zusetzen von Methylenblau in den Mischbehälter (21).

12. Gewinnungslinie nach Anspruch 11, wobei der Mischbehälter (21) mit einer Phototrode versehen ist.

13. Gewinnungslinie nach Anspruch 11, die Folgendes umfasst:
- eine spektrophotometrische Messzelle (29);
- Mittel (26, 28) zum Befördern des Mischbehälters (21) zur Messzelle (29) sowie Mittel (30) zum Befördern der Messzelle (29) zum Mischbehälter (21).

## Claims

1. Method for producing sand, wherein the sand produced has a methylene blue value falling within a predetermined range, said method comprising:
- extracting sand from a quarry;
- periodically and automatically taking an on-line sample of sand;
- automatically measuring the methylene blue value of the sample of sand;
- mixing the sand with an inerting agent.

2. Method according to claim 1, wherein automatically measuring the methylene blue value comprises automatically measuring the methylene blue value in an aqueous solution and/or automatically measuring the methylene blue value in a mixture of water and diethylene glycol.

3. Method according to either claim 1 or claim 2, wherein the mixing of the sand with an inerting agent is carried out upstream and/or downstream of the sand sampling point.

4. Method according to any of claims 1 to 3, wherein the amount of inerting agent during the mixing is adjusted according to the measurement of the methylene blue value and in such a way that the sand resulting from the mixing has a methylene blue value falling within the predetermined range.

5. Method according to any of claims 1 to 4, wherein the inerting agent is selected from cationic and mainly polycationic molecules, mainly of the polyamine type, with or without the supplementary addition of polyanionic molecules, cement fluidising agents.

6. Method according to any of claims 1 to 5, comprising homogenising and/or screening and/or dividing and/or drying the sample of sand, before the methylene blue value is measured.

7. Method according to any of claims 1 to 6, wherein measuring the methylene blue value comprises:
- mixing the sample of sand with a solution to form a dispersion;
- injecting a single dose of methylene blue into the dispersion;
- separating the dispersion into particles and a liquid fraction; and
- determining on the liquid fraction the amount of excess methylene blue which has not reacted with the sample of sand.

8. Method according to claim 7, wherein the amount of unreacted methylene blue is determined by measuring absorbance and/or transmittance.

9. Sand production line comprising:
- means (1) for extracting sand from a quarry;
- means (6) for periodically and automatically taking sand samples;
- means (10) for automatically measuring the methylene blue value of the sand sample;
- means (4) for mixing the sand with an inerting agent, said mixing means (4) being located upstream and/or downstream of the means (6) for taking sand samples.

10. Production line according to claim 9, comprising a control loop (12) between the means (10) for automatically measuring the methylene blue value and the means (4) for mixing the sand with an inerting agent.

11. Production line according to either claim 9 or claim 10, wherein the means (10) for measuring the methylene blue value comprise:
- a mixing container (21) for mixing the sand sample with a solution and with methylene blue;
- automatic means (24) for metering and injecting methylene blue into the mixing container (21).

12. Production line according to claim 11, wherein the mixing container (21) is provided with a phototrode.

13. Production line according to claim 11, comprising:
- a spectrophotometric measuring cell (29);
- means (26, 28) for conveying the mixing container (21) towards the measuring cell (29) and means (30) for conveying the measuring cell (29) towards the mixing container (21).
